# EUROPEAN PATENT APPLICATION

(11) **EP 2 402 575 A2**
(43) Date of publication of application: **04.01.2012**
(21) Application number: 11159579.9
(22) Date of filing: 24.03.2011
(51) Int. Cl.: F01P 11/14

(54) **Liquid level detection apparatus**

(30) Priority: 28.05.2010 JP 2010122816
(71) Applicant: AISIN SEIKI KABUSHIKI KAISHA, Kariya-shi, Aichi-ken 448-8650 (JP)
(72) Inventor: Kato, Tomohiko, Kariya-shi, Aichi-ken, 448-8650 (JP); Osaki, Daisuke, Kariya-shi, Aichi-ken, 448-8650 (JP)
(74) Representative: Winter, Brandl, Fürniss, Hübner, Röss, Kaiser, Polte - Partnerschaft

(57) **Abstract**

A liquid level detection apparatus (20) detecting a liquid level of a coolant (L) stored in a coolant tank (11) for an internal combustion engine (10), includes first and second electrodes (21, 22) immersed in the coolant (L) and electrically connected to each other via the coolant (L) when the liquid level of the coolant (L) is higher than a predetermined position (P), a transmitter (23) generating a sine wave including a specific frequency (f0) and equal amplitudes at positive and negative frequencies, the specific frequency (f0) being below a predetermined frequency, the transmitter (23) sending the sine wave to one of the first and second electrodes (21, 22), and a receiver (24) including a band-pass filter (42) receiving the sine wave outputted from the transmitter (23), via the other of the first and second electrodes (21, 22) to allow passage of the sine wave having the specific frequency (f0), and a determination portion (44) determining the liquid level of the coolant (L) in accordance with the sine wave passed through the band-pass filter (42).

## Description

### TECHNICAL FIELD

This disclosure relates to a liquid level detection apparatus detecting a liquid level of a coolant stored in a coolant tank for an internal combustion engine.

### BACKGROUND DISCUSSION

A known a liquid level switch (liquid level detection apparatus) included in an engine protection device is disclosed in JP1995-14133U (hereinafter referred to as Reference 1). The liquid level detection apparatus arranged in an upper tank of a radiator includes a float vertically moving in the upper tank depending on a liquid level of a coolant stored within the radiator. The liquid level detection apparatus includes contact points connected in series with a starter switch and a starter relay. When the liquid level reaches a position that is lower than a predetermined position, one of the contact points is opened by a magnet arranged within the float of the liquid level detection apparatus. In addition, a signal indicating that the liquid level is lower than the predetermined position is generated and outputted by the liquid level detection apparatus. Accordingly, the starter switch and the starter relay are electrically shielded in accordance with the outputted signal to close a fuel solenoid valve, thereby automatically stopping an operation of the engine and preventing the operation of the engine from restarting. Thus, according to the liquid level detection apparatus described in Reference 1, in a case where the radiator is insufficiently supplied with the coolant, the engine may be protected from overheating because of the insufficient coolant in the radiator.

A coolant passage through which the coolant flows is hermetically closed in a cooling system for the engine; therefore, the volume of the coolant does not remarkably increase and decrease even when the engine is operated for a long period of time, that is, the liquid level of the coolant does not remarkably vary. Accordingly, in the liquid level detection apparatus including the float disclosed in Reference 1, the float also may not remarkably move for a long period of time and a movable portion of the float may be clogged with dust or impure substances included in the coolant. Consequently, the float is brought into an unmovable state in a cylindrical body of the liquid level detection apparatus. As a result, the liquid level detection apparatus may not detect the liquid level of the coolant when the liquid level is actually low.

In addition, according to Reference 1, a capacitance liquid level detector or an ultrasonic liquid level detector in which the aforementioned unmovable state of the float does not occur may be applied to the liquid level detection apparatus. However, the capacitance liquid level detector or the ultrasonic liquid level detector is applied to the liquid level detection apparatus, therefore increasing the number of components and the cost of the liquid level detection apparatus.

Alternatively, according to Reference 1, an inexpensive electrode liquid level detector may be applied to the liquid level detection apparatus. However, electrodes of the electrode liquid level detector may deteriorate due to electric corrosion or the like because of an electric potential difference between the electrodes. Even when an alternating current is utilized in order to avoid the electric corrosion or the like, the liquid level detection apparatus may improperly operate, for example, due to frequency noises emitted from a power source of an igniter or switching noises generated from other circuits. In addition, the noise reduction performance of the liquid level detection apparatus may deteriorate due to the usage of a high-frequency signal (high-frequency noises may occur due to the high-frequency signal).

A need thus exists for a liquid level detection apparatus that is simply configured to detect a liquid level of a coolant stored in a coolant tank and that may not deteriorate electrodes and noise reduction performance while refraining from improperly operating due to high-frequency noises generated from a power source or the like.

### SUMMARY

According to an aspect of this disclosure, a liquid level detection apparatus detecting a liquid level of a coolant stored in a coolant tank for an internal combustion engine, includes first and second electrodes immersed in the coolant and electrically connected to each other via the coolant when the liquid level of the coolant is higher than a predetermined position, a transmitter generating a sine wave including a specific frequency and equal amplitudes at positive and negative frequencies, the specific frequency being below a predetermined frequency, the transmitter sending the sine wave to one of the first and second electrodes, and a receiver including a band-pass filter receiving the sine wave outputted from the transmitter, via the other of the first and second electrodes to allow passage of the sine wave having the specific frequency, and a determination portion determining the liquid level of the coolant in accordance with the sine wave passed through the band-pass filter.

For example, when the liquid level of the coolant in the coolant tank is higher than the predetermined position, the first electrode and the second electrode are electrically connected to each other. Accordingly, the sine wave outputted from the transmitter to the first electrode is inputted to the second electrode via the coolant. Then, the band-pass filter of the receiver allows passage of the sine wave. At this time, the pulse/digital conversion portion determines that the liquid level of the coolant is higher than the predetermined position. Meanwhile, when the liquid level of the coolant in the coolant tank is lower than the predetermined position, the first electrode and the second electrode are electrically disconnected from each other. At this time, the band-pass filter of the receiver barely or scarcely allows passage of the sine wave. Accordingly, the determination portion determines that the liquid level of the coolant L is lower than the predetermined position.

In the aforementioned detection for the liquid level of the coolant, the sine wave sent from the transmitter to the receiver has the equal amplitudes at the positive and negative frequencies, that is, a direct-current component is zero; therefore, deterioration of the first electrode and the second electrode due to electric corrosion or non-electrolyte depositions on surfaces of the first electrode and the second electrode may be refrained. In addition, the sine wave has the specific frequency below the predetermined frequency, thereby preventing the deterioration of the noise reduction performance of the liquid level detection apparatus. In addition, the band-pass filter substantially allows passage of the sine wave having the specific frequency only. Accordingly, for example, even in a case where high-frequency noises are simultaneously generated between the transmitter and the receiver, the liquid level detection apparatus may be refrained from improperly operating. The high-frequency noises are, for example, frequency noises emitted from a power source of an igniter or switching noises emitted from other circuits.

According to another aspect of the disclosure, a power source of the transmitter and the receiver is formed independently from the power source of the igniter for the internal combustion engine.

Accordingly, the power source of the transmitter and the receiver is refrained from being influenced by the frequency noises emitted from the power source of the igniter.

According to still another aspect of the disclosure, the power source of the transmitter and the receiver is formed independently from a power source of an inverter device configuring a cogeneration system together with the internal combustion engine and a generator that is connected to the internal combustion engine so as to be driven thereby. When the generator is in a power running mode, the inverter device converts a direct-current power source to an alternating-current power source and generates the alternating-current power source to supply the alternating-current power source to the generator.

Accordingly, the power source of the transmitter and the receiver is refrained from being influenced by the switching noises of the inverter device. Consequently, the liquid level detection apparatus may be refrained from improperly operating due to the switching noises of the power source of the inverter device on the power source.

According to a further aspect of the disclosure, the power source of the transmitter and the receiver is electrically connected to a frame ground that is independent from a frame ground of the internal combustion engine.

Accordingly, the power source of the transmitter and the receiver is refrained from being influenced by high-frequency noises emitted from various electric circuits of the internal combustion engine.

According to another aspect of the disclosure, the specific frequency is set to be below 150 kilohertz.

According to the aforementioned embodiment, the receiver is connected to an external device, and the external device stops an operation of the internal combustion engine when the liquid level of the coolant is lower than the predetermined position.

Accordingly, when the coolant tank is insufficiently supplied with the coolant, the external device forcibly stops the operation of the internal combustion engine; thereby, the internal combustion engine is protected from overheating because of the insufficient coolant in the coolant tank.

According to still another aspect of the disclosure, the internal combustion engine is a gas engine.

### BRIEF DESCRIPTION OF THE DRAWINGS

The foregoing and additional features and characteristics of this disclosure will become more apparent from the following detailed description considered with the reference to the accompanying drawings, wherein:

Fig. 1 is a block diagram illustrating an electric configuration of a liquid level detection apparatus according to an embodiment disclosed here; and

Fig. 2 is a block diagram illustrating a supply circuit and the like of the liquid level detection apparatus according to the embodiment disclosed here.

### DETAILED DESCRIPTION

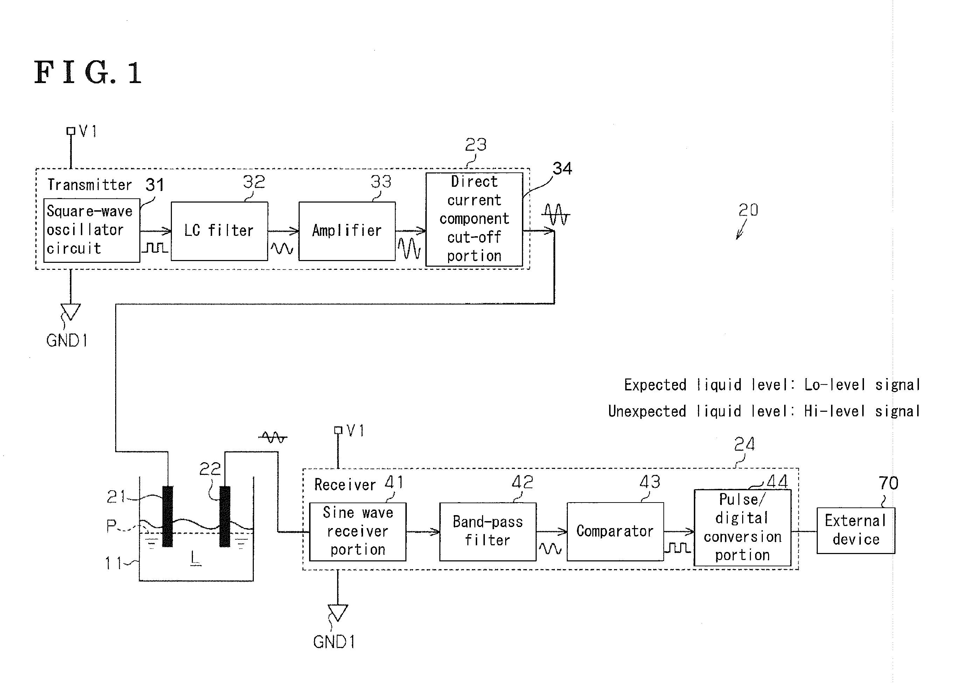

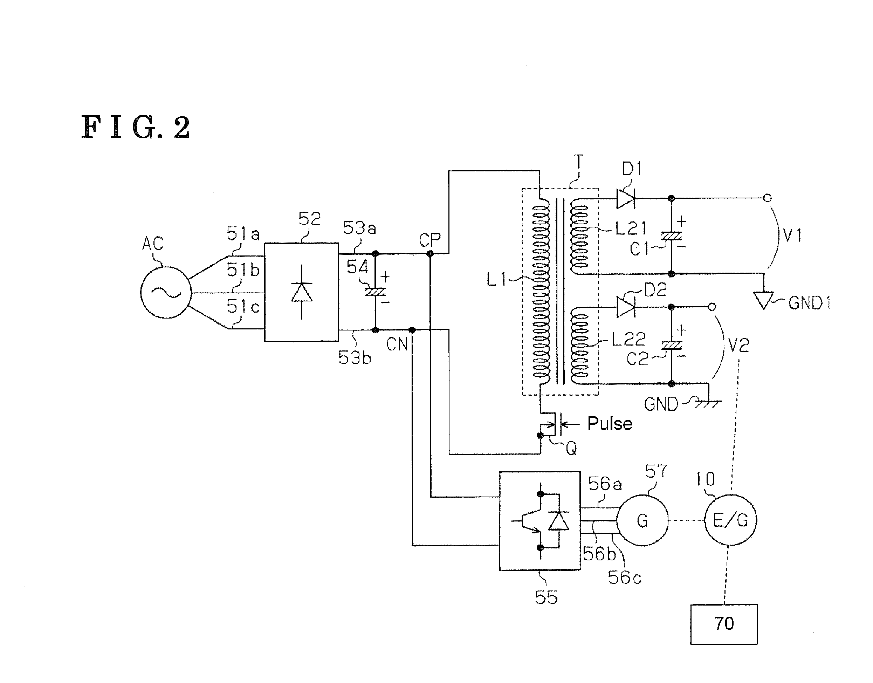

An embodiment of this disclosure will be described with reference to illustrations of the attached drawings as follows. Fig. 1 is a block diagram illustrating an electric configuration of a liquid level detection apparatus 20 according to the embodiment. As illustrated in Fig. 1, for example, a coolant L for cooling a gas engine 10 serving as an internal combustion engine is stored in a coolant tank 11 made of resin. The coolant tank 11, a circulation passage through which the coolant L flows, a coolant pump for circulating the coolant L, and the like configure a cooling system for the gas engine 10 (see Fig. 2) driven by fuel. The coolant L is filled in the coolant tank 11 until reaching a liquid level that is higher than a predetermined position P corresponding to the fluid volume with which a function of the cooling system may be maintained.

The liquid level detection apparatus 20 includes a pair of electrodes 21 and 22 (first and second electrodes) formed by carbon bars or the like, a transmitter 23, and a receiver 24. When the liquid level of the coolant L is higher than the predetermined position P, the first electrode 21 and the second electrode 22 are immersed in the coolant L to be therefore electrically connected to each other. When the liquid level of the coolant L is lower than the predetermined position P, the first electrode 21 and the second electrode 22 are electrically disconnected from each other.

The transmitter 23 is powered, for example, by a 5V direct-current power source V1 (for example, 200V) formed by a commercial three-phase alternator AC serving as an alternator (see Fig. 2). The direct-current power source V1 serves as a power source. The transmitter 23 includes a square-wave oscillator circuit 31, an LC filter 32 electrically connected to the square-wave oscillator circuit 31, an amplifier 33 electrically connected to the LC filter 32, and a direct-current component cut-off portion 34 electrically connected to the amplifier 33. The square-wave oscillator circuit 31 generates a square wave and outputs the square wave to the LC filter 32. After receiving the square wave from the square-wave oscillator circuit 31, the LC filter 32 generates the sine wave having a specific frequency f0 (for example, 130 kilohertz), and outputs the sine wave to the amplifier 33. The specific frequency f0 is below a predetermined frequency.

The amplifier 33 amplifies the sine wave outputted from the LC filter 32, in consideration of voltage drop due to the impedance of the coolant L that allows the first electrode 21 and the second electrode 22 to be electrically connected to each other. Afterward, the amplifier 33 outputs the amplified sine wave to the direct-current component cut-off portion 34. The direct-current component cut-off portion 34 is formed, for example, by a capacitor. In particular, the sine wave outputted from the LC filter 32 is inputted through the amplifier 33 to a first side of the direct-current component cut-off portion 34. Then, a direct current component included in the sine wave outputted from the LC filter 32 is cut off by the direct-current component cut-off portion 34; thereafter, the cut-off sine wave is outputted from a second side of the direct-current component cut-off portion 34. The cut-off sine wave outputted from the second side of the direct-current component cut-off portion 34 vertically fluctuates so as to draw symmetric curves about a horizontal axis at zero (0 volts), that is, the sine wave has equal amplitudes at positive and negative frequencies. The direct-current component cut-off portion 34 electrically connected to the first electrode 21 outputs the cut-off sine wave having the specific frequency f0 and the equal amplitudes at the positive and negative frequencies.

Thus, the transmitter 31 outputs (transmits) the sine wave having the specific frequency f0 and the equal amplitudes at the positive and negative frequencies. The sine wave outputted from direct-current component cut-off portion 34 to the first electrode 21 is inputted to (received by) the second electrode 22 via the coolant L.

The receiver 24 powered by the direct-current power source V1 includes a sine wave receiver portion 41 electrically connected to the second electrode 22, a band-pass filter 42 electrically connected to the sine wave receiver portion 41, a comparator 43 electrically connected to the band-pass filter 42, and a pulse/digital conversion portion 44 (determination portion) electrically connected to the comparator 43. The sine wave receiver portion 41 receives the sine wave inputted from the second electrode 22 and outputs the sine wave to a first side of the band-pass filter 42. The band-pass filter 42 is formed, for example, by an LCR circuit. The band-pass filter 42 resonates at the specific frequency f0, allowing passage of a signal at the specific frequency f0 or a frequency approximately equal thereto. Then, the signal is sent out from a second side of the band-pass filter 42 to the comparator 43. Accordingly, the sine wave having the specific frequency f0 is substantially outputted to the comparator 43.

The comparator 43 generates a signal (pulse) having a signal level (high or low level) represented in one of binary integers depending on a result of size comparison between a voltage of the signal (sine wave) from the band-pass filter 42 and a predetermined voltage, for example, 0 volts (the high or low level of the signal will be hereinafter referred to as a Hi-level or Lo-level). Then, the comparator 43 outputs the signal to the pulse/digital conversion portion 44. Accordingly, in a case where the signal outputted from the band-pass filter 42 mainly includes the sine wave having the specific frequency f0, a square wave is outputted from the comparator 43 to the pulse/digital conversion portion 44. The square wave alternates between the Hi-level and the Lo-level in accordance with the specific frequency f0. Meanwhile, in a case where the signal outputted from the band-pass filter 42 does not include the sine wave having the specific frequency f0, the comparator 43 outputs the signal transmitting substantially at the Lo-level. The pulse/digital conversion portion 44 receives the signal from the comparator 43 and converts the received signal to a digital signal serving as a detection signal. Then, the pulse/digital conversion portion 44 outputs the detection signal depending on the level of the signal outputted from the comparator 43, to an external device 70 serving as a microcomputer utilized to control the gas engine 10 as illustrated in Fig. 1. In particular, for example, when determining that the signal from the comparator 43 is formed as the square wave, the pulse/digital conversion portion 44 generates the detection signal at the Lo-level and outputs the Lo-level detection signal to the external device 70. Meanwhile, for example, when determining that the signal outputted from the comparator 43 transmits at the Lo-level or the like, the pulse/digital conversion portion 44 generates the detection signal at the Hi-level and outputs the Hi-level detection signal to the external device 70.

In the liquid level detection apparatus 20 configured as described above, when the liquid level of the coolant L in the coolant tank 11 is higher than the predetermined position P (at an expected or normal level) and the first electrode 21 and the second electrode 22 are electrically connected to each other, the sine wave having the specific frequency f0 and the equal amplitudes at the positive and negative frequencies is outputted from the transmitter 23 to the first electrode 21. Afterward, the sine wave is transmitted to the second electrode 22 via the coolant L. Then, the receiver 24 generates the Lo-level detection signal in accordance with the sine wave inputted from the second electrode 22 and outputs the Lo-level detection signal to the external device 70.

Meanwhile, when the liquid level of the coolant L in the coolant tank 11 is lower than the predetermined position P (at an error level) and the first electrode 21 and the second electrode 22 are electrically disconnected from each other, the sine wave outputted from the transmitter 23 to the first electrode 21 is not transmitted via the coolant L to the second electrode 22. Accordingly, the receiver 24 generates the Hi-level detection signal in accordance with the signal transmitting at the Lo-level or the like and outputs the Hi-level detection signal to the external device 70.

Thus, the liquid level detection apparatus 20 determines a relation between the liquid level and the predetermined position P in accordance with whether the sine wave is transmitted between the first electrode 21 and the second electrode 22 depending on the liquid level of the coolant L in the coolant tank 11. In addition, when the Hi-level detection signal is transmitted from the receiver 24 to the external device 70, i.e., for example, when the liquid level of the coolant L is lower than the predetermined position P and the coolant tank 11 is insufficiently supplied with the coolant L, the external device 70 forcibly stops an operation of the gas engine 10; thereby, the gas engine 10 is protected from overheating because of the insufficient coolant L in the coolant tank 11.

A supply circuit generating the direct-current power source V1 and a peripheral configuration of the supply circuit will be described with reference to Fig. 2 as follows. As illustrated in Fig. 2, the commercial three-phase alternator AC is electrically connected to a three-phase diode bridge 52 by three alternating-current wires 51 a, 51 b, and 51 c. The three-phase diode bridge 52 includes six diodes and rectifies an alternating voltage of the commercial three-phase alternator AC. The three-phase diode bridge 52 is electrically connected to an electrolytic capacitor 54 for reducing ripple, by positive and negative direct-current wires 53a and 53b. Accordingly, a direct-current voltage generated by the ripple reduction in the electrolytic capacitor 54 is supplied between the positive and negative direct-current wires 53a and 53b (i.e., the alternating voltage of the commercial three-phase alternator AC is converted to the direct-current voltage by the three-phase diode bridge 52 and the electrolytic capacitor 54).

In addition, a primary coil L1 of a high-frequency transformer T and a series circuit of a transistor Q formed, for example, by an N-channel MOSFET are electrically connected to connection points CP and CN, respectively, between the positive and negative direct-current wires 53a and 53b. In other words, a first terminal of the primary coil L1 is electrically connected to the connection point CP while a second terminal of the primary coil L1 is electrically connected to a drain of the transistor Q. Further, a source of the transistor Q is electrically connected to the connection point CN. For example, a pulse generated by a self-excited oscillator or an oscillator is supplied to a gate of the transistor Q; thereby, the transistor Q is switched on and off at a duty ratio depending on a signal frequency of the pulse. In addition, the signal frequency of the pulse supplied to the gate of the transistor Q is set to a different frequency from the specific frequency f0.

The high-frequency transformer T includes a pair of secondary coils L21 and L22 that are electrically independent from each other. A first terminal of the secondary coil L21 is electrically connected to a positive pole of a diode D1 while a second terminal of the secondary coil L21 is electrically connected to a frame ground GND1 that is electrically independent from a frame ground GND of the gas engine 10. Further, an electrolytic capacitor C1 for reducing ripple is electrically connected between the frame ground GND1 and a negative pole of the diode D1. The direct-current voltage between the connection points CP and CN decreases depending on the duty ratio and depending on a mutual inductance between the primary coil L1 and the secondary coil L21, thereby generating the direct-current power source V1. As described above, the direct-current power source V1 is supplied to the liquid level detection apparatus 20 (to the transmitter 23 and the receiver 24).

Meanwhile, a first terminal of the secondary coil L22 is electrically connected to a positive pole of a diode D2 while a second terminal of the secondary coil L22 is electrically connected to the frame ground GND. Further, an electrolytic capacitor C2 for reducing ripple is electrically connected between the frame ground GND and a negative pole of the diode D2. The direct-current voltage between the connection points CP and CN decreases depending on the duty ratio and depending on a mutual inductance between the primary coil L1 and the secondary coil L22, thereby generating a power source V2 for an igniter, which is a direct-current power source, for example, of 12 volts. An electric power of the power source V2 is supplied to the igniter of the gas engine 10. The power source V2 is electrically independent from the direct-current power source V1.

Moreover, an inverter device 55 is electrically connected to the connection points CP and CN between the positive and negative direct-current wires 53a and 53b. The inverter device 55 includes six switching elements. The inverter device 55 is electrically connected to a generator 57 by three alternating-current wires 56a, 56b, and 56c. The generator 57 is formed by a three-phase alternating-current motor. When the generator 57 is in a power running mode, the inverter device 55 converts the direct-current power source between the connection points CP and CN to an alternating-current power source and supplies the alternating-current power source to the generator 57. The generator 57 is connected to the gas engine 10 so as to be driven thereby. When being in the power running mode, the generator 57 functions as a starter motor (starter).

Meanwhile, when being in a regeneration mode, the generator 57 is driven by the gas engine 10, thereby generating an alternating-current. The inverter device 55 converts the alternating-current power source generated by the generator 57, to a direct-current power source, thereafter supplying the direct-current power source between the connection points CP and CN. A power source (switching power source) of the inverter device 55 is independent from the direct-current power source V1. Further, a switching frequency of the inverter device 55 is set to a different frequency from the specific frequency f0.

In addition, the inverter device 55, the generator 57, and the gas engine 10 configure a co-generation system. When the generator 57 is driven by the gas engine 10, exhaust gas emitted from the gas engine 10 is utilized to air conditioning and water heating systems.

As described above, according to the liquid level detection apparatus 20 of the embodiment, when the liquid level of the coolant L in the coolant tank 11 is higher than the predetermined position P, the first electrode 21 and the second electrode 22 are electrically connected to each other. Accordingly, the sine wave outputted from the transmitter 23 to the first electrode 21 and having the specific frequency f0 that includes the equal amplitudes is inputted to the second electrode 22 via the coolant L. Then, the band-pass filter 42 of the receiver 24 allows passage of the sine wave having the specific frequency f0. Accordingly, the pulse/digital conversion portion 44 determines that the liquid level of the coolant L is higher than the predetermined position P. Then, the pulse/digital conversion portion 44 outputs the signal at the corresponding level (the Lo-level detection signal is outputted). Meanwhile, when the liquid level of the coolant L in the coolant tank 11 is lower than the predetermined position P, the first electrode 21 and the second electrode 22 are electrically disconnected from each other. At this time, the band-pass filter 42 of the receiver 24 barely or scarcely allows passage of the sine wave having the specific frequency f0. Accordingly, the pulse/digital conversion portion 44 determines that the liquid level of the coolant L is lower than the predetermined position P, therefore outputting the signal at the corresponding level (the Hi-level detection signal is outputted).

In the aforementioned detection for the liquid level of the coolant L, the sine wave sent from the transmitter 23 to the receiver 24 has the equal amplitudes at the positive and negative frequencies, that is, the direct-current component is zero. Accordingly, an electrical potential difference is not generated between the first electrode 21 and the second electrode 22; therefore, deterioration of the first electrode 21 and the second electrode 22 due to electric corrosion or non-electrolyte depositions on surfaces of the first electrode 21 and the second electrode 22 may be refrained. In addition, the sine wave has the specific frequency f0 included in a long wavelength range, therefore minimizing deterioration of the noise reduction performance of the liquid level detection apparatus 20 (the occurrence of high-frequency current, noise voltage between terminals, or the like may be refrained). In addition, the band-pass filter 42 substantially allows passage of the sine wave having the specific frequency f0 only. Accordingly, for example, even in a case where high-frequency noises are simultaneously generated between the transmitter 23 and the receiver 24, the liquid level detection apparatus 20 may be refrained from improperly operating. The high-frequency noises are, for example, frequency noises emitted from the power source V2 of the igniter or switching noises emitted from the inverter device 55 and the transistor Q.

Thus, the liquid level detection apparatus 20 according to the embodiment may have a long life time and high noise reduction performance (the liquid level detection apparatus 20 may effectively minimize the high-frequency noises). In addition, according to the embodiment, the inexpensive liquid level detection apparatus 20 may be formed by a relatively small number of components. According to the liquid level detection apparatus 20 of the embodiment, the direct-current power source V1 of the transmitter 23 and the receiver 24 is electrically independent from the power source V2 of the igniter. Accordingly, the direct-current power source V1 of the transmitter 23 and the receiver 24 is refrained from being influenced by the frequency noises of the power source V2 of the igniter. Consequently, the liquid level detection apparatus 20 may be refrained from improperly operating due to the frequency noises of the power source V2 on the direct-current power source V1.

According to the liquid level detection apparatus 20 of the embodiment, the direct-current power source V1 of the transmitter 23 and the receiver 24 is electrically independent from the power source of the inverter device 55. Accordingly, the direct-current power source V1 of the transmitter 23 and the receiver 24 is refrained from being influenced by the switching noises of the inverter device 55. Consequently, the liquid level detection apparatus 20 may be refrained from improperly operating due to the switching noises of the power source of the inverter device 55 on the direct-current power source V1.

According to the liquid level detection apparatus 20 of the embodiment, the direct-current power source V1 of the transmitter 23 and the receiver 24 is electrically connected to the frame ground GND 1 that is electrically independent from the frame ground GND of the gas engine 10. Accordingly, for example, influences of high-frequency noises emitted from various electric circuits of the gas engine 10 (such as the frequency noises of the power source V2 of the igniter) on the direct-current power source V1 may be reduced.

In addition, the liquid level detection apparatus 20 according to the embodiment may be modified as follows. The supply circuit described in the embodiment is an example and a different supply circuit may be applied to the liquid level detection apparatus 20 of the embodiment. Moreover, a switching AC/DC converter may be applied to the liquid level detection apparatus 20 of the embodiment instead of the three-phase diode bridge 52. In a case where the switching AC/DC converter is applied to the liquid level detection apparatus 20, it is recommended that a frequency of the switching AC/DC converter be set to a different frequency from the specific frequency f0.

Moreover, according to the embodiment, when being in the power running mode, the generator 57 may drive auxiliary devices of the gas engine 10, such as a coolant pump and a fan. In the liquid level detection apparatus 20 according to the embodiment, the specific frequency f0 is below 150 kilohertz.

## Claims

1. A liquid level detection apparatus (20) detecting a liquid level of a coolant (L) stored in a coolant tank (11) for an internal combustion engine (10), comprising:
first and second electrodes (21, 22) immersed in the coolant (L) and electrically connected to each other via the coolant (L) when the liquid level of the coolant (L) is higher than a predetermined position (P);
a transmitter (23) generating a sine wave including a specific frequency (f0) and equal amplitudes at positive and negative frequencies, the specific frequency (f0) being below a predetermined frequency, the transmitter (23) sending the sine wave to one of the first and second electrodes (21, 22); and
a receiver (24) including a band-pass filter (42) receiving the sine wave outputted from the transmitter (23), via the other of the first and second electrodes (21, 22) to allow passage of the sine wave having the specific frequency (f0), and a determination portion (44) determining the liquid level of the coolant (L) in accordance with the sine wave passed through the band-pass filter (42).

2. The liquid level detection apparatus (20) according to Claim 1, wherein a power source (V1) of the transmitter (23) and the receiver (24) is formed independently from a power source (V2) of an igniter for the internal combustion engine (10).

3. The liquid level detection apparatus (20) according to Claim 1 or 2, wherein the power source (V1) of the transmitter (23) and the receiver (24) is formed independently from a power source of an inverter device (55) configuring a cogeneration system together with the internal combustion engine (10) and a generator (57) that is connected to the internal combustion engine (10) so as to be driven thereby, and
wherein when the generator (57) is in a power running mode, the inverter device (55) converts a direct-current power source to an alternating-current power source and generates the alternating-current power source to supply the alternating-current power source to the generator (57).

4. The liquid level detection apparatus (20) according to any one of Claims 1 to 3, wherein the power source (V1) of the transmitter (23) and the receiver (24) is electrically connected to a frame ground (GND1) that is independent from a frame ground (GND) of the internal combustion engine (10).

5. The liquid level detection apparatus (20) according to any one of Claims 1 to 4, wherein the specific frequency (f0) is set to be below 150 kilohertz.

6. The liquid level detection apparatus (20) according to any one of Claims 1 to 5, wherein the receiver (24) is connected to an external device (70), and the external device (70) stops an operation of the internal combustion engine (10) when the liquid level of the coolant (L) is below the predetermined position (P).

7. The liquid level detection apparatus (20) according any one of Claims 1 to 6, wherein the internal combustion engine (10) is a gas engine (10).
